# EUROPEAN PATENT APPLICATION

(11) **EP 3 513 946 A1**
(43) Date of publication of application: **24.07.2019**
(21) Application number: 19151882.8
(22) Date of filing: 15.01.2019
(51) Int. Cl.: B29C 64/112, B29C 64/393, B33Y 10/00, B33Y 30/00, B33Y 50/02

(54) **BUILDING APPARATUS AND BUILDING METHOD**

(30) Priority: 17.01.2018 JP 2018005873
(71) Applicant: Mimaki Engineering Co., Ltd., Tomi-City, Nagano 389-0512 (JP)
(72) Inventor: OKAWA, Masakatsu, Tomi-city, Nagano 389-0512 (JP); FURUKAWA, Yoshikazu, Tomi-city, Nagano 389-0512 (JP)
(74) Representative: Horn Kleimann Waitzhofer Patentanwälte PartG mbB

(57) **Abstract**

A building apparatus (10) for building a three-dimensional object includes an inkjet head (102w) serving as a head for light-reflective material for ejecting black ink that is a light-reflective material and an inkjet head (102k) serving as a head for light-absorbent material for ejecting white ink that is a light-absorbent material. The object has a light-shielding region formed of black ink to block visible light and a non-light shielding region different from the light-shielding region and at least partially formed of white ink. The light-shielding region is formed at a position overlapping at least part of the non-light shielding region. At least part of the non-light shielding region overlapping the light-shielding region is a region having a thickness that would allow visible light to pass through if the light-shielding region were absent.

## Description

### BACKGROUND OF THE INVENTION

### TECHNICAL FIELD

The present invention relates to a building apparatus and a building method.

### BACKGROUND ART

Building apparatuses (3D printers) have been known, which build objects using inkjet heads (for example, see JP 2015-71282A). In such building apparatuses, an object is built, for example, by additive manufacturing by successively adding a plurality of layers of ink formed by inkjet heads.

### SUMMARY

When objects are built with a building apparatus, the objects may be colored in various colors using coloring ink that is a material for coloring (coloring material) and/or white ink that is a material having the property of reflecting visible light (light-reflective material). In this case, for example, a region reflecting light (light-reflective region) is formed of white ink, and a colored region is formed on the outside using coloring ink. However, it may be difficult to produce the desired designs only by forming these regions, depending on the shapes of objects. Methods for building objects of various designs more appropriately therefore have been sought. The present invention is then aimed to provide a building apparatus and a building method that can solve the problem described above.

The inventor of the subject application has conducted elaborate studies on how to build colored objects. In the studies, the inventor actually built objects in various shapes and found a configuration with which it is difficult to realize the desired design, for example, only by forming a light-reflective region and a colored region. More specifically, for example, it has been found that when a thin part of an object is built by a conventional method, unintended transmission of light makes it difficult to realize the desired design. The inventor of the subject application has conducted further elaborate studies and contemplated additionally forming a light-shielding region using black ink, which is an example of a material absorbing light (light-absorbent material), to reduce the effect of unintended transmission of light. The inventor has also contemplated realizing the desired design appropriately by building an object with such a configuration. The inventor of the subject application has found features necessary for achieving such effects. This finding has led to completion of the present invention.

In order to solve the problem above, the present invention provides a building apparatus configured to build a three-dimensional object. The building apparatus includes a head for light-reflective material, configured to eject a light-reflective material having a property of reflecting visible light, and a head for light-absorbent material, configured to eject a light-absorbent material having a property of absorbing visible light. The building apparatus builds the object having a light-shielding region formed of the light-absorbent material ejected from the head for light-absorbent material to block visible light and a non-light shielding region different from the light-shielding region, at least part of the non-light shielding region being formed of the light-reflective material ejected from the head for light-reflective material. The light-shielding region is formed at a position overlapping at least part of the non-light shielding region. At least part of the non-light shielding region overlapping the light-shielding region is a region having a thickness that would allow visible light to pass through if the light-shielding region were absent.

In such a configuration, for example, the light-shielding region is formed at a section of the object where light transmission is not desired, thereby appropriately reducing the effect of unintended transmission of light. With such a configuration, for example, the desired design can be appropriately realized, and objects of various designs can be built more appropriately.

As used herein, blocking visible light in the light-shielding region means, for example, sufficiently blocking visible light, depending on the design to be expressed by the object and the desired quality. More specifically, the light-shielding region may be, for example, a region having a transmittance of visible light less than 20%. In this case, the transmittance of visible light refers to the transmittance of visible light with such a degree of intensity that impinges on the object in an environment in which the observer observes the completed object. The transmittance of visible light can be considered as, for example, the transmittance of visible light having an intensity equivalent to illumination light in typical room environments. The transmittance of visible light through the light-shielding region is preferably less than 10%, further preferably less than 5%. When the light-shielding region is formed so as to block light to such a level that does not substantially allow visible light to pass through, the transmittance of visible light through the light-shielding region is preferably less than 1%.

In at least part of the non-light shielding region, a thickness that would allow visible light to pass through if the light-shielding region were absent means, for example, a thickness that would allow transmission of visible light to be substantially visible if the object were built without the light-shielding region. In this case, allowing transmission of visible light to be substantially visible means, for example, a state in which the transmittance of visible light is equal to or greater than 20%. Depending on the design to be expressed by the object or the required quality, allowing transmission of visible light to be substantially visible can be considered as, for example, a state in which the transmittance is equal to or greater than 10%.

In this configuration, for example, white ink can be suitably used as the light-reflective material. For example, black ink can be suitably used as the light-absorbent material. In such a case, in order to prevent transmission of light through the object, for example, the thickness of the region formed of the light-reflective material such as white ink may be increased in the non-light shielding region. However, white ink for forming the light-reflective region has the property of reflecting light while scattering light and usually allows visible light to pass through to some extent. Then, in this case, in order to prevent transmission of light through the object without using the light-shielding region, it is necessary to considerably increase the thickness of the region formed of the light-reflective material. In this case, the amount of building material used in building is significantly increased, leading to significant increase of cost for building. Depending on the shape of the object, it may be difficult to significantly increase the thickness of the region formed of the light-reflective material. By contrast, in the configuration as described above, forming the light-shielding region can appropriately reduce the effect of unintended transmission of light while preventing such problems.

In this configuration, for example, an object observed in a predetermined observation direction may be built as the object. In this case, the observation direction refers to a direction preset as the direction in which the observer views the object. The observation direction may be considered as the direction in which the observer observes the object during normal observation. In this case, the light-shielding region being formed at a position overlapping at least part of the non-light shielding region refers to, for example, the positional relation in which the light-shielding region overlaps at least part of the non-light shielding region when the object is observed in the observation direction. More specifically, in this case, the light-shielding region is formed, for example, at a position where the non-light shielding region is interposed between the light-shielding region and the observer in the observation direction and thus formed at a position overlapping at least part of the non-light shielding region. With such a configuration, for example, the light-shielding region is hidden when observed in the observation direction, thereby appropriately reducing the effect of unintended transmission of light. When the feature of the light-shielding region is considered in connection with the position of the observer, for example, the light-shielding region may block visible light incident on the non-light shielding region from the side opposite to the position of the observer.

In this case, the light-shielding region may be formed, for example, in the inside of the object that is invisible from the outside the object. In such a configuration, for example, the light-shielding region can be appropriately formed at a position hidden from the observer. Depending on the shape of the object, the light-shielding region may be formed in a region visible from the outside of the object. In this case, the light-shielding region may be formed, for example, at a position invisible when the observer observes the object in the observation direction and visible from the outside of the object when the observer observes the object in a direction different from the observation direction. More specifically, in this case, the object having a cavity recessed inward from the surface may be built, and the light-shielding region may be formed on at least part of the surface surrounding the cavity. Also with such a configuration, the light-shielding region can be formed appropriately while the effect in the observation direction in observation is reduced.

In this configuration, a colored region may be formed as part of the non-light shielding region. In this case, the building apparatus further includes, for example, a head for coloring material, configured to eject a coloring material that is a material for coloring the object. More specifically, for example, a region having a colored region and a light-reflective region may be formed as the non-light shielding region. In this case, the colored region is a region, for example, formed of the coloring material ejected from the head for coloring material at a position visible from the outside of the object. The colored region may be, for example, a region colored with coloring materials of multiple colors different from each other. The light-reflective region is, for example, a region formed of the light-reflective material ejected from the head for light-reflective material at a position where the colored region is interposed between the light-reflective region and the observer in the observation direction. The light-reflective region can be considered, for example, as a region functioning as a region of a background color for the colored region. With such a configuration, for example, colored objects of a variety of designs can be appropriately built.

By forming the light-shielding region as described above, objects of a wider variety of designs can be built. Specifically, for example, a light-transmitting region may be formed as part of the non-light shielding region. In this case, the building apparatus further includes, for example, a head for light-transmitting material, configured to eject a light-transmitting material that allows visible light to pass through. For example, colorless and transparent clear ink can be used as the light-transmitting material. In this case, for example, a region having a light-transmitting region and a light-reflective region is formed as the non-light shielding region. The light-transmitting region is, for example, a region formed of the light-transmitting material ejected from the head for light-transmitting material so as to allow visible light to pass through part of the object. In this case, the light-shielding region is formed, for example, at a position overlapping at least part of the light-reflective region. For example, such a configuration appropriately prevents unintended transmission of light through the light-reflective region while allowing light to pass through the light-transmitting region. For example, an object of a sophisticated design thus can be appropriately built.

When such a light-transmitting region is formed, for example, a light source of visible light may be installed at a position where the object is interposed between the light source and the observer in the observation direction, so that visible light to be transmitted through the light-transmitting region is intentionally produced by the light source. In this case, the light-transmitting region, for example, allows visible light produced by the light source to pass through to the observer. The light-shielding region is formed, for example, at a position overlapping the light-reflective region at least on the periphery of the light-transmitting region to block light such that visible light produced by the light source does not pass through to the observer at least on the periphery of the light-transmitting region. Such a configuration enables an expression, for example, as if the light-transmitting region glows. For example, an object with a sophisticated design thus can be appropriately built. In this case, the thickness of the light-transmitting region may be, for example, smaller than the sum of a thickness of the non-light shielding region and a thickness of the light-shielding region on the periphery of the light-transmitting region. In such a configuration, for example, the visible light transmittance can be appropriately increased by reducing the thickness of the light-transmitting region.

As an expression of a variety of designs using the light-shielding region, for example, the light-shielding region may be formed only in a partial region so that the object has a section that allows light to pass through and a section that does not allow light to pass through to express a design of a see-through pattern. In this case, the design of a see-through pattern is, for example, a design in which the pattern corresponding to the light-shielding region is see-through when the object is observed in the observation direction. In this case, for example, the light-shielding region may be formed at a position overlapping only part of the non-light shielding region having a thickness that would allow visible light to pass through if the light-shielding region were absent. Also with such a configuration, for example, a wider variety of designs can be expressed using the light-shielding region. For example, an object of a sophisticated design thus can be appropriately built.

As another expression of designs, for example, the thickness of part of the light-shielding region may be different from that of the other section, so that the degree of blocking light (transmittance of visible light) differs with the position of the light-shielding region, and the manner of transmission of visible light is changed gradually. In this case, for example, the light-shielding region having a strong light-shielding section and a weak light-shielding section with different degrees of blocking light may be formed. In this case, the strong light-shielding section is formed, for example, of the light-absorbent material in the light-shielding region with a thickness that does not substantially allow visible to pass through. The weak light-shielding section is, for example, a section formed of the light-absorbent material to be thinner than the strong light-shielding section in the light-shielding region and blocks visible light with weaker light-blockability than the strong light-shielding section. In this case, the strong light-shielding section substantially not allowing visible light to pass through means, for example, that the transmittance of visible light is less than 1%. The weak light-shielding section may be formed such that the transmittance of visible light is approximately 10 to 50%. In this case, for example, a plurality of weak light-shielding sections with thicknesses different from each other may be formed so that the transmittances of visible light through the weak light-shielding sections are different from each other. With such a configuration, for example, a wider variety of designs can be expressed using the light-shielding regions. For example, an object of a sophisticated design thus can be appropriately built.

In an aspect of the present invention, for example, a building method having the same features as described above may be used. Also in this case, for example, the similar effects as described above can be achieved. This building method may be considered as, for example, a method of manufacturing an object. Advantageous Effects of the Invention

According to the present invention, for example, objects of various designs can be built more appropriately.

### BRIEF DESCRIPTION OF THE DRAWINGS

FIGs. 1A to 1C are diagrams illustrating an example of a building apparatus 10 according to an embodiment of the present invention, in which FIG. 1A illustrates an example of the configuration of the main part of the building apparatus 10, FIG. 1B illustrates an example of the configuration of a head 12 in the building apparatus 10, and FIG. 1C is a perspective view of an example of the configuration of an object 50 built by the building apparatus 10.
FIGs. 2A and 2B are diagrams illustrating the configuration of the object 50 in more detail, in which FIG. 2A is a cross-sectional view of an example of the detailed configuration of the object 50 and FIG. 2B illustrates a manner of installation of the object 50.
FIGs. 3A and 3B are diagrams illustrating a modification of the configuration of the object 50, in which FIG. 3A illustrates a modification of the configuration of the object 50 and FIG. 3B illustrates another modification of the configuration of the object 50.
FIGs. 4A and 4B are diagrams illustrating a modification of the configuration of the object 50, in which FIG. 4A illustrates another modification of the configuration of the object 50 and FIG. 4B illustrates another modification of the configuration of the object 50.

### DESCRIPTION OF EMBODIMENTS

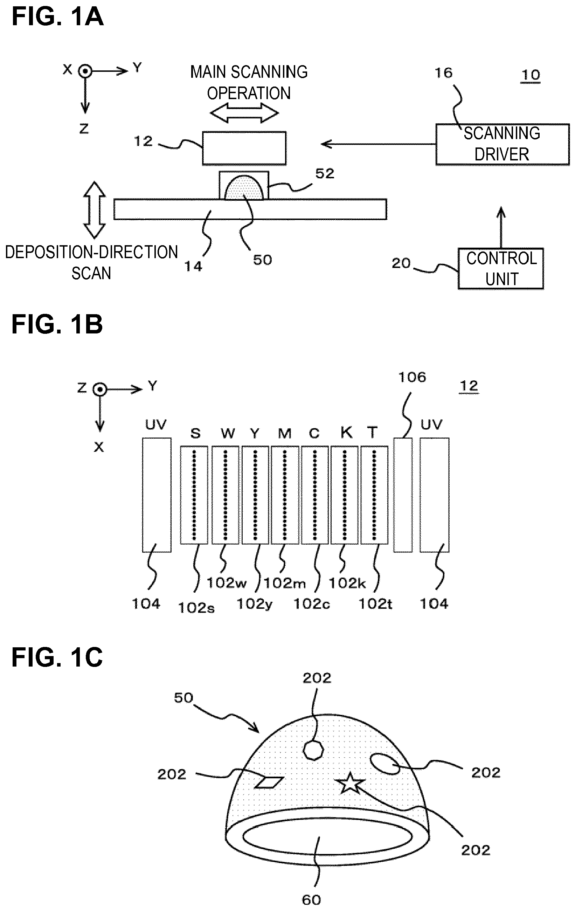

Embodiments according to the present invention are described below with reference to the drawings. FIGs. 1A to 1C illustrate an example of a building apparatus 10 according to an embodiment of the present invention. FIG. 1A illustrates an example of the configuration of the main part of the building apparatus 10. FIG. 1B illustrates an example of the configuration of a head 12 in the building apparatus 10.

The building apparatus 10 may have features identical or similar to those of known building apparatuses, except the points described below. More specifically, the building apparatus 10 may have features identical or similar to those of known building apparatuses that build an object by ejecting droplets serving as the material of an object 50 using inkjet heads, except the points described below. The building apparatus 10 may further include a variety of components, for example, necessary for building the object 50, in addition to the components illustrated in the figures.

In this example, the building apparatus 10 is a building apparatus (3D printer) that builds a three-dimensional object 50 by additive manufacturing. In this case, the additive manufacturing refers to, for example, a method of building the object 50 by adding a plurality of layers. The object 50 refers to, for example, a three-dimensionally structured object. In the present example, the building apparatus 10 includes the head 12, a stage 14, a scan driver 16, and a control unit 20.

The head 12 ejects a material of the object 50. In the present example, ink is used as the material of the object 50. In this case, the ink refers to, for example, a functional liquid. In the present example, ink can be considered as, for example, a liquid ejected from an inkjet head. In this case, the inkjet head refers to, for example, an ejection head ejecting ink droplets by inkjet. More specifically, the head 12 ejects ink that hardens on a predetermined condition, as a material of the object 50 from a plurality of inkjet heads. The landed ink droplets are hardened whereby the layers of the object 50 are successively added. In the present example, UV curable ink (UV ink) that hardens from a liquid state by radiation of ultraviolet rays is used as the ink. The head 12 further ejects a material of a support layer 52 in addition to the material of the object 50. The head 12 thus forms the support layer 52, for example, on the periphery of the object 50, if necessary. The support layer 52 refers to a deposition structure formed under an overhang, for example, when an object 50 having an overhang shape is built. The support layer 52 is formed during building of the object 50, if necessary, and removed after completion of building. A more specific configuration of the head 12 will be described in detail later.

The stage 14 is a table-like member that supports the object 50 being built and is disposed at a position opposed to the inkjet heads in the head 12, and the object 50 being built is placed on the upper surface of the stage 14. In the present example, the stage 14 has a configuration in which at least its upper surface is movable in a deposition direction (Z direction in the figure), and is driven by the scan driver 16 such that at least the upper surface moves as the building of the object 50 proceeds. In this case, the deposition direction refers to, for example, a direction in which the building material is deposited in the additive manufacturing. More specifically, in the present example, the deposition direction is a direction orthogonal to the main scanning direction (Y direction in the figure) and the sub scanning direction (X direction in the figure).

The scan driver 16 is a driver that causes the head 12 to perform a scanning operation of moving relative to the object 50 being built. In this case, "moving relative to the object 50 being built" means, for example, moving relative to the stage 14. "Allowing the head 12 to perform a scanning operation" means, for example, causing the inkjet heads included in the head 12 to perform a scanning operation. In the present example, the scan driver 16 causes the head 12 to perform a main scanning operation (Y scan), a sub scanning operation (X scan), and a deposition-direction scan (Z scan).

The main scanning operation is, for example, the operation of ejecting ink while moving relative to the object 50 being built in the main scanning direction. In the present example, the scan driver 16 causes the head 12 to perform a main scanning operation by moving the head 12 while fixing the position of the stage 14 in the main scanning direction. In a modification of the configuration of the building apparatus 10, for example, the object 50 may be moved, for example, by moving the stage 14 while fixing the position of the head 12 in the main scanning direction. As will be described in more detail later, in the present example, the head 12 further includes ultraviolet (UV) light sources. Then, during the main scanning operation, the scan driver 16 further drives the UV light sources in the head 12. More specifically, the scan driver 16, for example, turns on the UV light sources during the main scanning operation to harden ink droplets placed on the surface to be formed of the object 50. The "surface to be formed of the object 50" is, for example, a surface on which the next layer of ink is formed by the head 12.

The sub scanning operation is, for example, the operation of moving relative to the object 50 being built in the sub scanning direction orthogonal to the main scanning direction. More specifically, the sub scanning operation is, for example, the operation of moving relative to the stage 14 in the sub scanning direction by a preset feed amount. In the present example, the scan driver 16 causes the head 12 to perform the sub scanning operation in the interval of the main scanning operations. In this case, the scan driver 16 causes the head 12 to perform the sub scanning operation, for example, by moving the stage 14 while fixing the position of the head 12 in the sub scanning direction. Alternatively, the scan driver 16 may cause the head 12 to perform the sub scanning operation by moving the head 12 while fixing the position of the stage 14 in the sub scanning direction.

The deposition-direction scan is, for example, the operation of moving the head 12 in the deposition direction relative to the object 50 being built by moving at least one of the head 12 or the stage 14 in the deposition direction. In this case, "moving the head 12 in the deposition direction" means, for example, moving at least the inkjet heads in the head 12 in the deposition direction. "Moving the stage 14 in the deposition direction" means, for example, moving the position of at least the upper surface of the stage 14. The scan driver 16 adjusts the relative position of the inkjet heads to the object 50 being built, in the deposition direction, by causing the head 12 to perform the deposition-direction scan as the building operation proceeds. More specifically, in the deposition-direction scan in the present example, the scan driver 16 moves the stage 14 while fixing the position of the head 12 in the deposition direction. The scan driver 16 may move the head 12 while fixing the position of the stage 14 in the deposition direction.

The control unit 20 is, for example, a central processing unit (CPU) of the building apparatus 10 and controls the building operation in the building apparatus 10 by controlling each part of the building apparatus 10. More specifically, the control unit 20 controls each part of the building apparatus 10, for example, based on shape information and color information of the object 50 to be formed. According to this example, the object 50 can be shaped appropriately.

The more specific configuration of the head 12 will now be described. In the present example, the head 12 includes a plurality of inkjet heads, a plurality of UV light sources 104, and a planarizing roller 106. The head 12 includes, as a plurality of inkjet heads, an inkjet head 102s, an inkjet head 102w, an inkjet head 102y, an inkjet head 102m, an inkjet head 102c, an inkjet head 102k, and an inkjet head 102t, as illustrated in FIG. 1B. These inkjet heads are, for example, aligned in the sub scanning direction and disposed in a row in the main scanning direction. Each inkjet head includes a nozzle row on the surface opposed to the stage 14. The nozzle row includes a plurality of nozzles arranged in a predetermined nozzle row direction. In the present example, the nozzle row direction is a direction parallel to the sub scanning direction.

Of these inkjet heads, the inkjet head 102s is an inkjet head ejecting the material of the support layer 52. In the present example, UV curable ink having a lower degree of cure by ultraviolet rays than the material of the object 50 is used as the material of the support layer 52. The inkjet head 102s thus ejects UV curable ink serving as the material of the support layer 52 from the nozzles in the nozzle row. For example, known materials for support layers can be suitably used as the material of the support layer 52.

The inkjet head 102w is an example of the head for light-reflective material and ejects white (W) ink, which is an example of the light-reflective material, from the nozzles in the nozzle row. In this case, the light-reflective material is, for example, a material having the property of reflecting visible light. In the present example, white ink is used, for example, for forming a region having the property of reflecting light (light-reflective region) in the object 50. This light-reflective region reflects light from the outside of the object 50, for example, when the surface of the object 50 is colored in full-color representation. Full-color representation is, for example, representation of colors by a possible combination of process color inks by subtractive color mixing.

The inkjet head 102y, the inkjet head 102m, the inkjet head 102c, and the inkjet head 102k (hereinafter referred to as inkjet heads 102y to 102k) are examples of the head for coloring material and each ejects ink of the corresponding color of a plurality of colors for coloring (ink for coloring) from the nozzles in the nozzle row. In this case, the inks of colors ejected by the inkjet heads 102y to 102k are examples of the coloring material which is the material for coloring the object 50. More specifically, the inkjet head 102y ejects yellow (Y) ink. The inkjet head 102m ejects magenta (M) ink. The inkjet head 102c ejects cyan (C) ink. The inkjet head 102k ejects black (K) ink. In this case, the colors Y, M, C, and K are examples of process colors for use in full-color representation. In the present example, black ink is an example of the light-absorbent material, which is a material having the property of absorbing visible light. The inkjet head 102k is an example of the head for light-absorbent material for ejecting a light-absorbent material. Black ink is also used for forming a light-shielding region in the object 50. The light-shielding region in the object 50 will be described in more detail later.

The inkjet head 102t is an example of the head for light-transmitting material and ejects clear ink, which is an example of the light-transmitting material, from the nozzles in the nozzle row. In this case, the light-transmitting material refers to, for example, a material that allows visible light to pass through. The clear ink refers to, for example, clear ink (T) that is colorless and transparent. In this case, the clear ink that is colorless and transparent means that, for example, ink is not colored intentionally and in a substantially colorless and transparent state.

The plurality of UV light sources 104 are light sources (UV light sources) for hardening ink and generate ultraviolet rays for hardening UV curable ink. In the present example, the plurality of UV light sources 104 are respectively disposed on one end side and the other end side of the main scanning direction in the head 12, with the rows of the inkjet heads interposed therebetween. For example, a UVLED (ultraviolet light emitting diode) can suitably be used as the UV light source 104. Alternatively, a metal halide lamp or a mercury vapor lamp may be used as the UV light source 104. The planarizing roller 106 is planarizing means for planarizing the layer of ink formed during building of the object 50. The planarizing roller 106 comes into contact with the surface of the layer of ink and removes part of the ink before hardening, for example, during the main scanning operation, thereby planarizing the layer of ink. Using the head 12 having the configuration described above, the layer of ink that forms the object 50 can be formed appropriately. Furthermore, a plurality of layers of ink are successively added so that the object 50 can be built appropriately.

The specific configuration of the head 12 is not limited to the configuration described above and may be susceptible to various modifications. For example, the head 12 may further include, as inkjet heads for coloring, inkjet heads for colors other than Y, M, C, and K. The arrangement of a plurality of inkjet heads in the head 12 is also susceptible to various modifications. For example, some of the inkjet heads may be displaced in the sub scanning direction from the other inkjet heads.

An object 50 built by the building apparatus 10 in the present example will now be described in more detail. FIG. 1C is a perspective view of an example of the configuration of the object 50 built by the building apparatus 10. In the present example, the building apparatus 10 builds, for example, an object 50 having a cavity 60 and a light-transmitting region 202 as illustrated in the figure. In this case, the cavity 60 is a region recessed inward from the surface of the object 50. As will be described in more detail later, in the present example, the cavity 60 is used, for example, for accommodating a light source (lighting) in the inside.

The light-transmitting region 202 is a region transmitting light such that light from one side passes through to the other side. In the present example, the light-transmitting region 202 is formed of clear ink ejected by the inkjet head 102t so as to allow visible light to pass through part of the object 50. In this case, the light-transmitting region 202 is exposed on the cavity 60 of the object 50 on one side and exposed on the surface (outer surface) of the object 50 on the other side so that, for example, light produced by the light source placed in the inside of the cavity 60 is emitted to the outside of the object 50. With such a configuration, for example, the object 50 can be installed such that the light-transmitting region 202 appears to glow. For example, this configuration can appropriately improve the design of the object 50.

As illustrated in the figure, the object 50 may have a plurality of light-transmitting regions 202. If each light-transmitting region 202 is formed, for example, only of clear ink, the formed light-transmitting region 202 is colorless and transparent. Depending on the requested design of the object 50, for example, a colored light-transmitting region 202 may be formed of coloring ink and clear ink. In this case, it is preferable that the light-transmitting region 202 is formed to have sufficient light transmittance, for example, by reducing the proportion of coloring ink within an appropriate range.

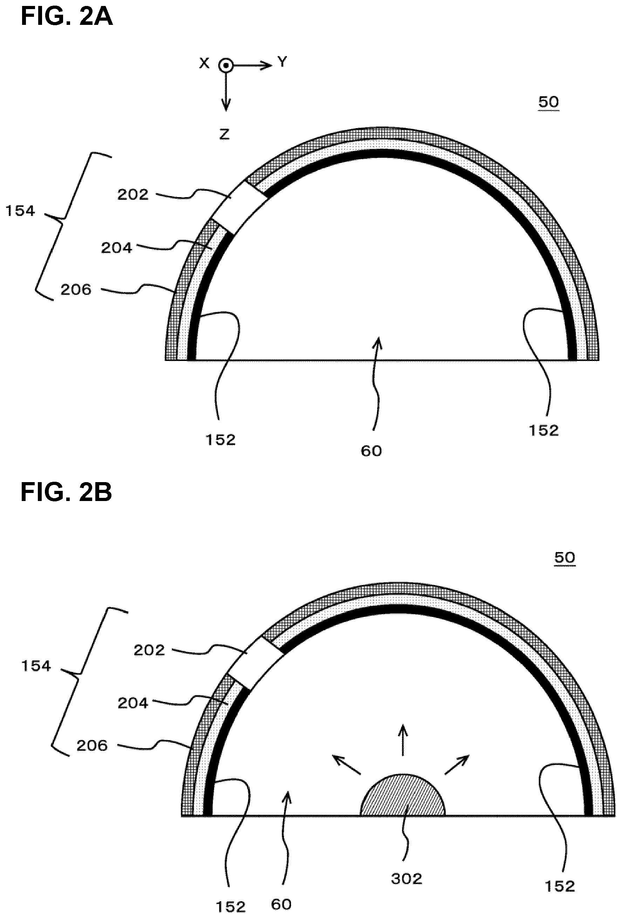

The configuration of the object 50 in the present example will now be described in more detail. FIGs. 2A and 2B are diagrams illustrating the configuration of the object 50 in more detail. FIG. 2A is a cross-sectional view of an example of the more detailed configuration of the object 50 and illustrates an example of the configuration in cross section in a plane orthogonal to the sub scanning direction of the object 50 having the same or similar configuration as the object 50 in FIG. 1C. In this case, the cross section of the object 50 in a plane orthogonal to the sub scanning direction refers to the cross section in a plane orthogonal to the sub scanning direction when the object 50 is put in the same direction as in building in the coordinate system set in the building apparatus 10. For convenience of illustration and explanation, FIGs. 2A and 2B illustrate only one of a plurality of light-transmitting regions 202 in FIG. 1C. FIG. 2B illustrates an example of the manner of installation of the object 50.

In the present example, the object 50 has a light-shielding region 152 and a non-light shielding region 154. The light-shielding region 152 is a region that is formed of black ink ejected from the inkjet head 102k so as to block visible light (see FIG. 1). In this case, the light-shielding region 152 blocking visible light means, for example, blocking visible light sufficiently for the design to be expressed by the object 50 and the required quality. More specifically, in the present example, the light-shielding region 152 is preferably, for example, a region having a transmittance of visible light less than 20%. In this case, the transmittance of visible light is the transmittance of visible light with a degree of intensity that impinges on the object 50 in an environment in which the observer observes the completed object 50. The environment in which the observer observes the completed object 50 is, for example, an environment in which the object 50 is put for sale or exhibition. The transmittance of the light-shielding region 152 is, for example, the transmittance of the light-shielding region 152 when taken alone, i.e. when it is removed from the object 50. The transmittance of visible light may be considered as, for example, the transmittance of visible light having an intensity equivalent to illumination light in typical room environments. The transmittance of visible light through the light-shielding region 152 is more preferably less than 10%, further preferably less than 5%.

More specifically, the light-shielding region 152 in the present example is formed so as to block light to such a level that does not substantially allow visible light to pass through. In this case, the transmittance of visible light through the light-shielding region 152 is preferably less than 1%. In this case, it is preferable to form the light-shielding region 152 using only black ink. Such a configuration, for example, can appropriately reduce the thickness of the light-shielding region 152 necessary for achieving the required light-blocking characteristic. The light-shielding region 152 may be considered as, for example, a region that continuously covers a certain range with a light-absorbent color such as black. In the present example, the light-shielding region 152 is formed, for example, in the cavity 60 of the object 50 such that it is formed at a position not visible from the outside of the object 50 (the inside of the object 50) as illustrated in the figures. In this case, the light-shielding region 152 being formed in the cavity 60 means, for example, that the light-shielding region 152 is formed on at least part of the wall surface forming the cavity 60 (the inner wall of the object 50). With such a configuration, for example, the light-shielding region 152 can be appropriately formed at a position hidden from the observer. In the present example, the position where the light-shielding region 152 is formed can be considered as, for example, the position invisible when the observer observes the object in the observation direction and visible from the outside of the object 50 when the observer observes in a direction different from the observation direction. The light-shielding region 152 may not necessarily be formed so as to be exposed on the inner wall of the cavity 60 and may be formed inside the object 50 such that it is not exposed on the surface of the object 50.

In the present example, the non-light shielding region 154 is a region other than the light-shielding region 152 in the object 50. In this case, the region other than the light-shielding region 152 is, for example, the region other than the light-shielding region 152 intentionally formed for blocking light. The non-light shielding region 154 can be considered as a region different from the light-shielding region 152 in the object 50. The non-light shielding region 154 can be considered as, for example, a region in which the transmittance of visible light per unit thickness is larger than that of the light-shielding region 152. More specifically, in the present example, the light-shielding region 152 is a region including a light-transmitting region 202, a light-reflective region 204, and a colored region 206.

The light-transmitting region 202 is a region formed so as to allow visible light to pass through part of the object 50, as described above with reference to FIG. 1C. In the present example, the light-transmitting region 202 is formed to have the same thickness as the total thickness of the other regions formed on its periphery as illustrated in the figures. More specifically, in this case, the thickness of the light-transmitting region 202 is equal to the total thickness of the light-reflective region 204, the colored region 206, and the light-shielding region 152 formed on its periphery.

The light-reflective region 204 and the colored region 206 are regions for coloring the surface of the object 50 and formed in an overlapping manner in the vicinity of the surface of the object 50 such that the light-reflective region 204 is formed on the inside of the object 50 and the colored region 206 is formed on the outside, as illustrated in the figure. In this case, the inside of the object 50 is the side closer to the cavity 60 of the object 50. The inside of the object 50 may be considered as, for example, the side farther from the outer surface of the object 50. In this case, the outer surface of the object 50 is, for example, the surface visible to the observer when the object 50 is observed from the normal observation direction. The observation direction refers to, for example, a direction preset as the direction in which the observer views the object 50. The observation direction may be considered as the direction in which the observer observes the object 50 during normal observation. The outside of the object 50 is, for example, the side farther from the cavity 60 of the object 50. The outside of the object 50 may be considered as, for example, the side closer to the outer surface of the object 50.

The light-reflective region 204 is a region reflecting light that is formed of white ink ejected from the inkjet head 102w (see FIG. 1) to reflect light. The light-reflective region 204 is formed at a position such that the colored region 206 is interposed between the light-reflective region 204 and the observer in the observation direction. The light-reflective region 204 thus functions as a region of a background color for the colored region 206. In the present example, the object 50 is installed, for example, as illustrated in FIG. 2B, such that the cavity 60 is hidden when observed in the observation direction. In this case, the observation direction in which the object 50 is observed from the outside of the cavity 60 can be considered as the normal observation direction.

The colored region 206 is a region formed of inks for coloring ejected from the inkjet heads 102y to 102k and formed, for example, on the outer surface side of the light-reflective region 204 in the object 50, as illustrated in the figure, at a position where the color of the object 50 is visible. In the present example, inks of multiple colors different from each other (inks of Y, M, C, and K) are used to form the colored region 206 in full color. In this case, clear ink may be additionally used to form the colored region 206, thereby compensating for variation in the amount of use of ink among different colors at different sites in the colored region 206. According to this example, for example, colored objects 50 of various designs can be appropriately built.

As explained above, in the present example, the object 50 has a shape having the cavity 60. The non-light shielding region 154 including the light-transmitting region 202, the light-reflective region 204, and the colored region 206 is formed so as to surround the cavity 60, as illustrated in the figures. The light-shielding region 152 is formed on the cavity 60 side so as to overlap the section other than the light-transmitting region 202 in the non-light shielding region 154 and thus formed at a position overlapping at least part of the non-light shielding region 154. Such a configuration can prevent, for example, unintended transmission of light through the section other than the light-transmitting region 202 in the object 50.

As explained above in conjunction with FIG. 1C, in the present example, the cavity 60 is used for, for example, accommodating a light source in the inside. More specifically, in this case, for example, as illustrated in FIG. 2B, a light source 302 of visible light is placed in the inside of the cavity 60 such that the light source 302 is covered with the object 50. In the present example, the object 50 is an object 50 observed in a predetermined observation direction and is observed from the outside of the object 50 such that the light source 302 is hidden in the cavity 60 of the object 50. In this configuration, the light source 302 produces light (visible light) at a position where the object 50 is interposed between the light source 302 and the observer in the observation direction. The light-transmitting region 202 allows light produced by the light source 302 to pass through to the observer. Thus, in the present example, light produced by the light source 302 is emitted to the outside of the object 50 through the light-transmitting region 202. In this case, the light-shielding region 152 is formed so as to cover the section other than the light-transmitting region 202 in the non-light shielding region 154, from the cavity 60 side, thereby preventing unintended transmission of light in the section other than the light-transmitting region 202. According to this example, for example, a design in which only the section of the light-transmitting region 202 in the object 50 glows can be appropriately realized. For example, this configuration can appropriately improve the design of the object 50.

As explained above, in the present example, the non-light shielding region 154 is formed so as to surround the cavity 60. More specifically, the non-light shielding region 154 is formed like a thin shell along the outer surface of the object 50 so as to surround the cavity 60, as illustrated in the figures. In this case, if only the light-reflective region 204 and the colored region 206 in the non-light shielding region 154 are formed without the light-shielding region 152, light produced by the light source 302 may be transmitted to some extent even through the overlapping portion of the light-reflective region 204 and the colored region 206. Actually, in the present example, at least part of the non-light shielding region 154 overlapping the light-shielding region 152 is a region having a thickness that would allow visible light to pass through if the light-shielding region 152 were absent. In this case, "thickness that would allow visible light to pass through if the light-shielding region 152 were absent" means, for example, a thickness that would allow transmission of visible light to be substantially visible if an object 50 were built without the light-shielding region 152 as illustrated in the figure. In this case, allowing transmission of visible light to be substantially visible means, for example, a state in which the transmittance of visible light is equal to or greater than 20%. Depending on the design to be expressed by the object or the required quality, allowing transmission of visible light to be substantially visible can be considered as, for example, a state in which the transmittance is equal to or greater than 10%.

In this respect, in the present example, the light-shielding region 152 is formed, for example, in the section where transmission of light is not desired in the object 50, thereby appropriately reducing the effect of unintended transmission of light. The desired design thus can be appropriately realized, and objects of various designs can be appropriately built. In the present example, the light-shielding region 152 is formed on the cavity 60 side of the object 50 so that the light-shielding region 152 is formed at a position where the non-light shielding region 154 is interposed between the light-shielding region 152 and the observer in the observation direction. For example, this configuration can appropriately prevent the light-shielding region 152 from being seen when observed in the observation direction. In this configuration, for example, the light-shielding region 152 is formed without affecting the appearance of the object 50 to reduce the effect of unintended transmission of light more appropriately. When the feature of the light-shielding region 152 is considered in connection with the position of the observer, for example, the light-shielding region 152 blocks visible light incident on the non-light shielding region 154 from the side opposite to the position of the observer.

The feature of this example can be generalized as follows: the light-shielding region 152 is formed, for example, at a position overlapping at least part of the light-reflective region 204 and the like in the non-light shielding region 154. Such a configuration, for example, can appropriately prevent unintended transmission of light through the light-reflective region 204 and the like. In this case, the light-shielding region 152 may be formed, for example, at a position overlapping at least part of the non-light shielding region 154 in a direction parallel to the direction in which visible light is incident on the light-shielding region 152 (such as the layering direction or the direction normal to the surface of the object 50). The direction in which visible light is incident on the light-shielding region 152 can be considered, for example, as the direction of visible light from the outside of the object 50 to the light-shielding region 152. In the actual configuration, this direction is, for example, the direction of light blocked by the light-shielding region 152. This direction may be considered as, for example, the direction in which visible light is incident on the non-light shielding region 154 when visible light passes through at least part of the non-light shielding region 154 in the absence of the light-shielding region 152. When the non-light shielding region 154 having the light-transmitting region 202 is formed as in the present example, it is preferable that the light-shielding region 152 is formed at a position overlapping the light-reflective region 204 and the like at least on the periphery of the light-transmitting region 202. With such a configuration, for example, light can be appropriately blocked such that light produced by the light source 302 passes through to the observer at least on the periphery of the light-transmitting region 202. This enables, for example, more appropriate expression as if the light-transmitting region 202 of the object 50 glows.

In order to prevent unintended transmission of light through the object 50, for example, the thickness of the light-reflective region 204 and the like in the light-shielding region 152 may be increased rather than forming the light-shielding region 152. However, white ink for forming the light-reflective region 204 has the property of reflecting light while scattering light and usually allows visible light to pass through to some extent. Then, in this case, in order to prevent transmission of light through the object 50 without using the light-shielding region 152, it is necessary to considerably increase the thickness of the light-reflective region 204. In this case, the amount of building material used in building is significantly increased, leading to significant increase of cost for building. Depending on the shape of the object 50, it may be difficult to increase the thickness of the light-reflective region 204. By contrast, according to this example, forming the light-shielding region 152 can appropriately reduce the effect of unintended transmission of light while preventing such problems.

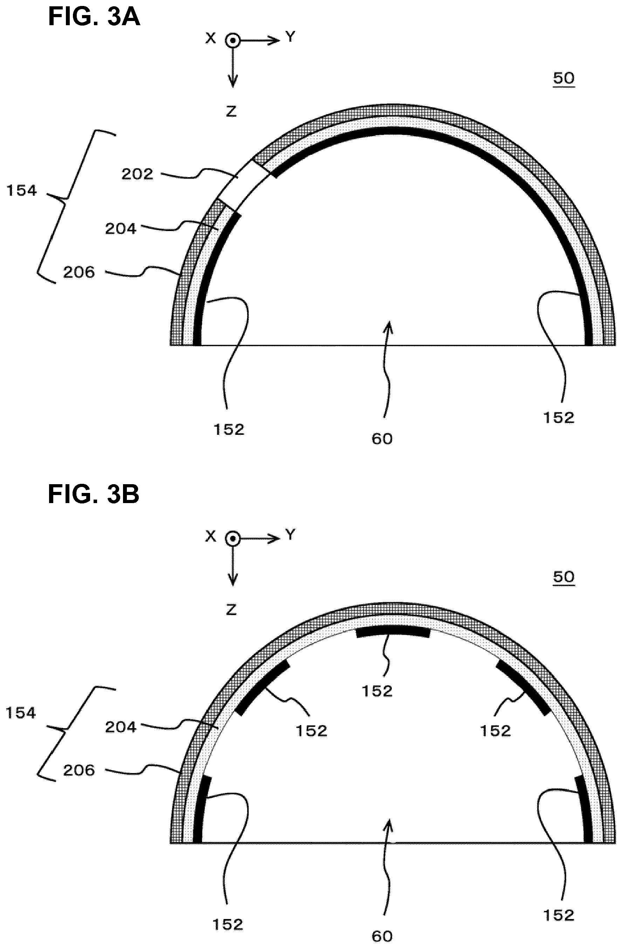

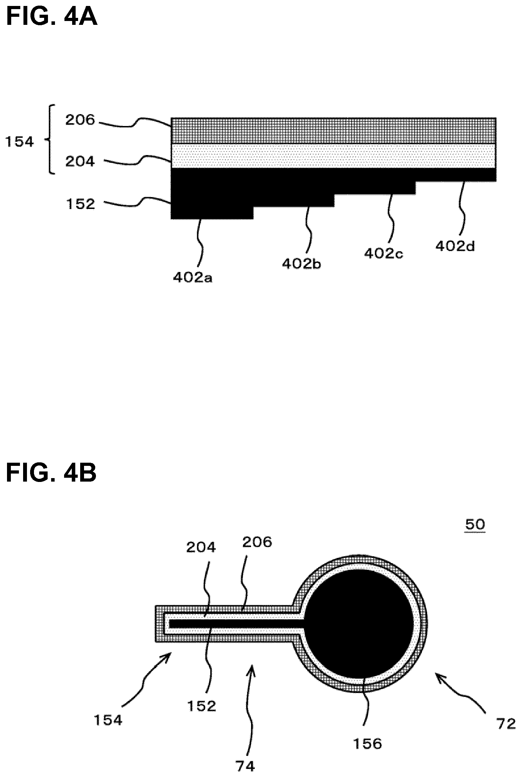

The specific configuration of the object 50 is not limited to the configuration described above and is susceptible to various modifications. Modifications of the configuration of the object 50 will be described below. FIGs. 3A and 3B and FIGs. 4A and 4B are diagrams illustrating modifications of the configuration of the object 50. In FIGs. 3A and 3B and FIGs. 4A and 4B, the configuration denoted by the same reference signs as in FIGs. 1A to 1C and FIGs. 2A and 2B has the same or similar features as the configuration in FIGs. 1A to 1C and FIGs. 2A and 2B except for the points described below.

FIG. 3A illustrates a modification of the configuration of the object 50. As explained above, in FIGs. 2A and 2B, the light-transmitting region 202 is formed with the same thickness as the total thickness of the regions formed on the periphery thereof. However, the thickness of the light-transmitting region 202 may not necessarily be matched with the periphery. More specifically, the thickness of the light-transmitting region 202 may be, for example, smaller than the total thickness of the regions on the periphery of the light-transmitting region 202. In this case, the total thickness of the regions on the periphery of the light-transmitting region 202 is, for example, the sum of the thickness of the non-light shielding region 154 and the thickness of the light-shielding region 152 on the periphery of the light-transmitting region 202. The thickness of the non-light shielding region 154 on the periphery of the light-transmitting region 202 is, for example, the sum of the thickness of the light-reflective region 204 and the thickness of the colored region 206 on the periphery of the light-transmitting region 202. FIG. 3A illustrates an example in which the thickness of the light-transmitting region 202 is, for example, equal to the sum of the thickness of the light-reflective region 204 and the thickness of the colored region 206 on the periphery of the light-transmitting region 202. In such a configuration, for example, the thickness of the light-transmitting region 202 is reduced compared with the configuration illustrated in FIGs. 2A and 2B, thereby appropriately increasing the visible light transmittance of the light-transmitting region 202.

In the configuration described above, the light-shielding region 152 is formed so as to overlap the entire section other than the light-transmitting region 202 in the non-light shielding region 154. For example, this configuration can appropriately prevent transmission of light through a position other than the light-transmitting region 202. However, to express a wider variety of designs, light may be intentionally transmitted through part of the section other than the light-transmitting region 202 in the non-light shielding region 154.

FIG. 3B is a diagram illustrating another modification of the configuration of the object 50. In the present modification, the light-shielding region 152 is formed only at a position overlapping part of the non-light shielding region 154 having a thickness that would allow light to pass through if the light-shielding region 152 of the object 50 so that the object 50 has a section that allows light to pass through and a section that does not allow light to pass through. In such a configuration, the object 50 is built, for example, such that when the object 50 is observed in the observation direction, the pattern corresponding to the light-shielding regions 152 is visible as a see-through pattern. More specifically, in this case, as illustrated in the figure, the light-shielding regions 152 are formed only at part of the surface on the cavity 60 side of the object 50 to allow light to pass through part of the light-reflective region 204 and the colored region 206 of the object 50 to some extent. In this case, for example, when the light source 302 is turned on in the cavity 60 in the same manner as illustrated in FIG. 2B, the pattern corresponding to the light-shielding regions 152 is visible from the outside of the object 50. Therefore, according to this modification, for example, a wider variety of designs can be expressed using the light-shielding regions 152.

In the configuration of the present modification, for example, the design of a see-through pattern can be expressed by forming the pattern with light-shielding regions 152 in a section hidden in the normal observation direction and emitting light from the light-shielding region 152 side. FIG. 3B illustrates the configuration of the object 50 without the light-transmitting region 202, for simplicity of illustration. However, in another modification of the object 50, for example, the light-transmitting region 202 having the same or similar configuration as illustrated in FIGs. 2A and 2B may be additionally formed.

FIG. 4A illustrates another modification of the configuration of the object 50. The light-shielding region 152 described above mainly has the feature of absorbing light with a high absorption ratio. However, the light absorption ratio in the light-shielding region 152 may be, for example, reduced at least partially depending on the requested designs. In this case, for example, the thickness of part of the light-shielding region 152 may be different from that of the other section so that the degree of blocking light (transmittance of visible light) differs with the position of the light-shielding region 152. With such a configuration, for example, the manner of transmission of visible light through the light-shielding region 152 can be changed gradually.

More specifically, in this modification, the light-shielding region 152 has a plurality of light-shielding sections 402a to 402d having thicknesses different from each other. In this case, the respective thicknesses of the light-shielding sections 402a to 402d are, for example, the thicknesses in a direction orthogonal to the surface of the object 50. The light-shielding sections 402a to 402d are formed of black ink with thicknesses different from each other and thus have visible light transmittances different from each other. In this case, of a plurality of light-shielding sections 402a to 402d, the thickest light-shielding section 402a is an example of the strong light-shielding section in the light-shielding region 152 and has a thickness that does not substantially allow visible light to pass through. The light-shielding section 402a may be formed, for example, such that visible light transmittance is less than 1%. The light-shielding sections 402b to 402d are examples of the weak light-shielding section in the light-shielding region 152 and are formed to be thinner than the light-shielding section 402a and block visible light with weaker light-blockability than the light-shielding section 402a. Each of the light-shielding sections 402b to 402d may be formed, for example, such that the visible light transmittance is approximately 10 to 50%. In this modification, the light-shielding sections 402b to 402d have thicknesses different from each other so that the visible light transmittances are different from each other. According to this modification, for example, a wider variety of designs can be expressed using the light-shielding region 152. For example, an object 50 of a more sophisticated design thus can be appropriately built.

FIG. 4B illustrates another modification of the configuration of the object 50. The object 50 described above has a cavity in the inside. However, the object 50 is not limited to the object 50 having a cavity 60 and the configuration can be modified in various ways. For example, the light-shielding region 152 may be formed inside the object 50 so as to be surrounded by the other regions. The object 50 may further include an interior region 156 that forms the interior of the object 50 in addition to the regions described above.

More specifically, in this modification, the shape of the object 50 has a body 72 forming the main shape of the object 50 and a protrusion 74 protruding from the body 72. In this case, the body 72 is a region having a thickness larger than the protrusion 74 and, as illustrated in the figures, a light-reflective region 204 and a colored region 206 are formed on the periphery of the interior region 156. In this case, the interior region 156 is a region that forms the interior of the object 50. By forming the interior region 156, for example, the thickness of the light-reflective region 204 and the colored region 206 is constant irrespective of the shape of the object 50. For example, the object 50 can be colored more appropriately with high quality.

In this modification, the interior region 156 is formed, for example, of black ink, in the same manner as the light-shielding region 152. However, for example, when the thickness of the body 72 is large enough to prevent transmission of light, the light-shielding region 152 may be formed of ink other than black ink. In this case, any ink other than the material of the support layer may be used. Also in this modification, for example, the section other than the light-shielding region 152 in the object 50 can be considered as a non-light shielding region 154.

The protrusion 74 is a section having a small thickness protruding from the body 72. In this modification, the light-shielding region 152 is formed inside the protrusion 74 so as to be surrounded by the light-reflective region 204 and the colored region 206. In this case, the light-transmitting region 202 and the light-reflective region 204 surrounding the light-shielding region 152 can be considered as part of the non-light shielding region 154. The protrusion 74 is a region having a thickness that would allow visible light to pass through if the light-shielding region 152 were absent. Therefore, also in this modification, at least part of the non-light shielding region 154 overlapping the light-shielding region 152 can be considered to be a region having a thickness that would allow visible light to pass through if the light-shielding region 152 were absent. In this case, formation of the light-shielding region 152 is thought to prevent unintended transmission of light through the protrusion 74.

Supplemental remarks on the configurations described above will now be given. First of all, supplemental remarks on the features of the light-shielding region 152 will be given. The light-shielding region 152 described above is formed mainly of black ink. In this case, for example, the light-shielding region 152 may be formed only of black ink. However, in a modification of the object 50, for example, the light-shielding region 152 may be formed of a light-absorbent material other than black ink (for example, light-absorbent ink other than black ink). In this case, the light-absorbent material refers to, for example, a material with a high light absorption compared with inks of white or colors Y, M, and C.

Forming the light-shielding region 152 with a light-absorbent material may be considered as forming the light-shielding region 152 so as to sufficiently absorb visible light at least at the time of completion of the object 50. The light-shielding region 152 described above is formed mainly of a material of a single color. However, the light-shielding region 152 may be formed, for example, of a combination of materials of colors each of which has a low light absorption when used alone. More specifically, in this case, the light-shielding region 152 may be formed of inks of the colors Y, M, and C so that the light-shielding region 152 is formed in a color that is black or close to black by mixture of the colors Y, M, and C. In this case, the inks of the colors Y, M, and C serve as both a coloring material and a light-absorbent material. The inkjet head 102y, the inkjet head 102m, and the inkjet head 102c (see FIGs. 1A and 1B) serve both as heads for coloring material and heads for light-absorbent material.

In the above description of the light-shielding region 152, a predetermined single color is mainly used to form the entire light-shielding region 152. However, depending on the requested designs of the object 50, for example, different kinds of light-absorbent materials may be used to form a light-shielding region 152 having a plurality of regions of colors different from each other. Also in this case, each of the regions of the light-shielding region 152 is preferably formed in a single color selected for the region. The position where the light-shielding region 152 is formed may be, for example, the inside of the light-reflective region 204 as viewed by the observer who views the object 50. For example, when a light source is used as in the case illustrated in FIGs. 2A and 2B, the light-shielding region 152 may be formed closer to the light source than at least part of the light-reflective region 204.

Supplemental remarks on the applications and specific configuration of the object 50 will now be given. As explained above with reference to FIGs. 2A and 2B, for example, the object 50 may have the colored region 206 and the light-transmitting region 202 on the outer surface section of the object 50 visible to the observer and is illuminated with light from the light source on the back. In this case, how the object 50 looks may greatly vary depending on the ambient brightness and whether the light source is turned on or off.

More specifically, for example, in the bright environment, the object 50 may be displayed such that the graphics or pattern drawn on the colored region 206 is visible. In this case, the light source may be turned off. In this case, the object 50 intended for display during daytime is exhibited by intentionally brightening the surroundings and turning off the light source. For example, in the dark environment, for example, the object 50 is displayed by turning on the light source and utilizing the light-transmitting region 202 rather than the graphics or pattern drawn on the colored region 206. In this case, the object 50 intended for display during nighttime may be exhibited by intentionally darkening the surroundings and turning on the light source.

In such a manner of exhibition, for example, an object 50 of a vehicle such as automobile may be built and exhibited. In this case, for example, the part corresponding to lighting such as headlamp may be the light-transmitting region 202. With such a configuration, for example, the light source installed inside the object 50 is turned on to appropriately express the state in which the headlamp is turned on. The exhibition intended for display during daytime or display during nighttime can appropriately improve the design of the object 50.

### Industrial Applicability

The present invention can be suitably used for, for example, a building apparatus.

## Claims

1. A building apparatus (10) configured to build a three-dimensional object (50), comprising:
a head (102w) for light-reflective material, configured to eject a light-reflective material having a property of reflecting visible light; and
a head (102k) for light-absorbent material, configured to eject a light-absorbent material having a property of absorbing visible light, wherein
the building apparatus (10) is configured to build the object (50) such that the object (50) has:
a light-shielding region (152) formed of the light-absorbent material ejected from the head (102k) for light-absorbent material to block visible light and
a non-light shielding region (154) different from the light-shielding region (152), at least part of the non-light shielding region (154) being formed of the light-reflective material ejected from the head (102w) for light-reflective material,
the light-shielding region (152) is formed at a position overlapping at least part of the non-light shielding region (154), and
at least part of the non-light shielding region (154) overlapping the light-shielding region (152) is a region having a thickness that would allow visible light to pass through if the light-shielding region (152) were absent.

2. The building apparatus (10) according to claim 1, wherein the building apparatus (10) is configured to build the object (50) such that the light-shielding region (152) blocks visible light incident on the non-light shielding region (154) from a side opposite to a position of an observer who views the object (50).

3. The building apparatus (10) according to claim 1 or 2, wherein the building apparatus (10) is configured to build the object (50) such that the light-shielding region (152) is formed at a position where the non-light shielding region (154) is interposed between the light-shielding region (152) and the observer in an observation direction preset as a direction in which the observer views the object (50), and thus formed at a position overlapping at least part of the non-light shielding region (154).

4. The building apparatus (10) according to claim 2 or 3, further comprising a head (102t) for light-transmitting material, configured to eject a light-transmitting material that allows visible light to pass through, wherein the building apparatus (10) is configured to build the object (50) such that:
the non-light shielding region (154) has
a light-transmitting region (202) formed of the light-transmitting material ejected from the head (102t) for light-transmitting material so as to allow visible light to pass through part of the object (50) and
a light-reflective region (204) formed of the light-reflective material ejected from the head (102w) for light-reflective material, and
the light-shielding region (152) is formed at a position overlapping at least part of the light-reflective region (204).

5. The building apparatus (10) according to claim 4, wherein the building apparatus (10) is configured to build the object (50) such that:
when a light source of visible light is turned on at a position where the object (50) is interposed between the light source and the observer in the observation direction,
the light-transmitting region (202) allows visible light produced by the light source to pass through to the observer, and
the light-shielding region (152) is formed at a position overlapping the light-reflective region (204) at least on the periphery of the light-transmitting region (202) to block light such that visible light produced by the light source does not pass through to the observer at least on the periphery of the light-transmitting region (202).

6. The building apparatus (10) according to claim 4 or 5, wherein the building apparatus (10) is configured to build the object (50) such that the light-transmitting region (202) has a thickness smaller than the sum of a thickness of the non-light shielding region (154) and a thickness of the light-shielding region (152) on the periphery of the light-transmitting region (202).

7. The building apparatus (10) according to any one of claims 3 to 6, wherein the building apparatus (10) is configured to build the object (50) such that the light-shielding region (152) is formed at a position invisible when the observer observes the object (50) in the observation direction and visible from outside of the object (50) when the observer observes the object (50) in a direction different from the observation direction.

8. The building apparatus (10) according to any one of claims 3 to 7, further comprising a head (102y, 102m, 102c, 102k) for coloring material, configured to eject a coloring material, the coloring material being a material for coloring the object (50), wherein the building apparatus (10) is configured to build the object (50) such that:
the non-light shielding region (154) has:
a colored region formed of the coloring material ejected from the head (102y, 102m, 102c, 102k) for coloring material, at a position visible from outside of the object (50) and
a light-reflective region (204) formed of the light-reflective material ejected from the head (102w) for light-reflective material, at a position where the colored region is interposed between the light-reflective region (204) and the observer in the observation direction.

9. The building apparatus (10) according to any one of claims 3 to 8, wherein the building apparatus (10) is configured to build the object (50) such that:
the light-shielding region (152) is formed at a position overlapping only part of the in non-light shielding region (154) having a thickness that would allow visible light to pass through if the light-shielding region (152) were absent, and
a pattern corresponding to the light-shielding region (152) is visible as a see-through pattern when the object (50) is observed in the observation direction.

10. The building apparatus (10) according to any one of claims 1 to 9, wherein the building apparatus (10) is configured to build the object (50) such that the light-shielding region (152) has:
a strong light-shielding section (402a) formed of a light-absorbent material with a thickness that does not substantially allow visible light to pass through and
a weak light-shielding section (402b) formed of the light-absorbent material to block visible light with weaker light-blockability than the strong light-shielding section (402a).

11. The building apparatus (10) according to any one of claims 1 to 10, wherein
the light-reflective material is white ink and
the light-absorbent material is black ink.

12. A building method of building a three-dimensional object (50), comprising:
using a head (102w) for light-reflective material, configured to eject a light-reflective material having a property of reflecting visible light;
using a head (102k) for light-absorbent material, configured to eject a light-absorbent material having a property of absorbing visible light; and
building the object (50) such that the object (50) has:
a light-shielding region (152) formed of the light-absorbent material ejected from the head (102k) for light-absorbent material to block visible light, and
a non-light shielding region (154) different from the light-shielding region (152), at least part of the non-light shielding region (154) being formed of the light-reflective material ejected from the head (102w) for light-reflective material,
the light-shielding region (152) being formed at a position overlapping at least part of the non-light shielding region (154),
at least part of the non-light shielding region (154) overlapping the light-shielding region (152) being a region having a thickness that would allow visible light to pass through if the light-shielding region (152) were absent.

13. A building apparatus (10) configured to build a three-dimensional object (50), wherein
the building apparatus (10) is configured to build the object (50) such that the object (50) has a light-shielding region (152) to block visible light and a non-light shielding region (154) different from the light-shielding region (152),
the light-shielding region (152) is formed at a position overlapping at least part of the non-light shielding region (154), and
at least part of the non-light shielding region (154) overlapping the light-shielding region (152) is a region having a thickness that would allow visible light to pass through if the light-shielding region (152) were absent.

14. A building method of building a three-dimensional object (50), comprising:
building the object (50) having a light-shielding region (152) to block visible light and a non-light shielding region (154) different from the light-shielding region (152),
the light-shielding region (152) being formed at a position overlapping at least part of the non-light shielding region (154),
at least part of the non-light shielding region (154) overlapping the light-shielding region (152) being a region having a thickness that would allow visible light to pass through if the light-shielding region (152) were absent.
